# EUROPEAN PATENT APPLICATION

(11) **EP 3 493 021 A1**
(43) Date of publication of application: **05.06.2019**
(21) Application number: 17204759.9
(22) Date of filing: 30.11.2017
(51) Int. Cl.: G06F 1/16

(54) **WEARABLE ELECTRONIC DEVICE AND METHOD FOR CONTROLLING A WEARABLE DISPLAY DEVICE**

(71) Applicant: Vestel Elektronik Sanayi ve Ticaret A.S., 45030 Manisa (TR)
(72) Inventor: ÇUBUKÇU, Baran, 45030 Manisa (TR); ÖZBAY, Mustafa Caner, 45030 Manisa (TR)
(74) Representative: Flint, Adam

(57) **Abstract**

There is provided a wearable electronic device (200) comprising a screen (202) for displaying an image to a user. The wearable electronic device (200) comprises a strap for securing the device (200) to a wrist of the user. The device (200) also comprises at least two sensors (216A, 216B) located at different locations on or in the strap. Each sensor is operable to detect the user's heartbeat when the wearable electronic device (200) is being worn by the user. The wearable electronic device (200) comprises a processor configured and arranged to receive input signals from the at least two sensors, and based on the received input signals, to determine an orientation for displaying an image at the screen (202) of the wearable electronic device (200). The processor is configured to cause the image to be displayed at the screen (202) with the determined orientation.

## Description

### Technical Field

The present disclosure relates to a wearable electronic device and a method for controlling the display orientation of an image at a wearable display device.

### Background

Many types of electronic devices are wearable. These devices include, for example, smart devices, such as smartwatches or smart bands. Wearable devices such as these are often lightweight and include a strap for securing the device to a user's wrist. These devices also include a screen for displaying information to a user who is wearing the device. However, for known wearable devices, the orientation with which the information is displayed at the screen does not take into consideration the orientation with which the wearable device is being worn. This can result in information being displayed upside down, if, for example, the wearable device itself is being worn upside down. As will be appreciated, this can be inconvenient for a user who is trying to view the information displayed at the screen.

### Summary

According to a first aspect disclosed herein, there is provided a wearable electronic device comprising:
a screen for displaying an image to a user;
a strap for securing the wearable electronic device to a wrist of the user;
at least two sensors located at different locations on or in the strap, each sensor being operable to detect the user's heartbeat when the wearable electronic device is being worn by the user; and
a processor configured and arranged to:
   receive input signals from the at least two sensors;
   determine, based on input signals received from the sensors, an orientation for displaying an image at the screen of the wearable electronic device; and
   cause the image to be displayed with the determined orientation at the screen of the wearable electronic device.

In some examples, the processor is configured to compare the amplitudes of the input signals received from the sensors to determine the orientation for displaying the image based on the comparison.

In some examples, the strap comprises a first strap portion and a second strap portion, the first strap portion being shorter than the second strap portion, the first strap portion and the second strap portion being fastenable together to secure the wearable electronic device to a wrist of a user; and the first sensor is located at the first strap portion and the second sensor is located at the second strap portion such that the sensors are arranged to detect the user's heartbeat at opposite sides of the anterior of the user's wrist when the wearable electronic device is being worn by the user.

In some examples, a buckle may be provided on the first, shorter strap portion for receiving the second, longer strap portion to connect the first and second strap portions together. In some examples, the first strap portion may be equal in length to the second strap portion.

In some examples, the processor is configured to detect, based on the received input signals, whether the wearable electronic device is being worn in a default orientation, the default orientation corresponding to the first strap portion being wrapped around the outside edge of the user's wrist and the second strap portion being wrapped around the inside edge of the user's wrist.

In some examples, the processor is configured to rotate the image by 180 degrees if the wearable electronic device is detected as not being worn in the default orientation.

In some examples, wherein the wearable electronic device comprises a smartwatch.

According to a second aspect disclosed herein, there is provided a method for controlling the display orientation of an image at a wearable display device, the method comprising: detecting a user's pulse with a first sensor and a second sensor of the wearable display device; determining, based on the amplitudes of signals output by the sensors, an orientation for displaying an image at the wearable display device; and causing the image to be displayed with the determined orientation at the wearable display device.

In some examples, determining an orientation for displaying an image at the wearable display device comprises determining whether the amplitude of the signal output by the first sensor is larger than the amplitude of the signal output by the second sensor.

In some examples, one of the sensors is expected to output a signal with a larger amplitude when the display device is being worn in a default orientation, and wherein the method comprises rotating the image by 180 degrees if the amplitude of the user's pulse is detected as being larger at the other sensor. In some examples, the method comprises not rotating the image by 180 degrees if the sensor that is expected to output a signal with a larger amplitude is detected as outputting a signal with a larger amplitude, relative to the amplitude of the signal output by the other sensor.

In some examples, the method comprises detecting an amplitude of the user's pulse at different sides of the anterior of the user's wrist.

In some examples, the wearable display device comprises a smartwatch.

### Brief Description of the Drawings

To assist understanding of the present disclosure and to show how embodiments may be put into effect, reference is made by way of example to the accompanying drawings in which:
Figure 1A shows schematically a front view of an example of a known wearable electronic device;
Figure 1B shows schematically a front view of the wearable electronic device shown in Figure 1A, but rotated by 180 degrees;
Figure 2A shows schematically a front view of a wearable electronic device in accordance with the present disclosure;
Figure 2B shows schematically a rear view of a wearable electronic device in accordance with the present disclosure;
Figure 3 shows schematically an anterior view of a user's wrist around which a wearable electronic device is being worn;
Figure 4A shows schematically a front view of a wearable electronic device displaying an image; and
Figure 4B shows schematically a front view of a wearable electronic device for which an image has been rotated by 180 degrees.

### Detailed Description

Many different types of wearable electronic devices are known in the art. Generally, these devices employ a screen for displaying information to a user who is wearing the wearable electronic device. Hence, these devices are also often referred to as wearable display devices. Examples of wearable electronic devices include smartwatches and smart bands.

Smartwatches provide a user with the functionality of a clock and a screen for displaying the time to the user. However, smartwatches are typically equipped with additional functionalities. These include, for example, the functionality of heart rate monitors, blood pressure monitors, pedometers, accelerometers, altimeters, GPS tracking devices, media players, calendar applications, email or text-messaging applications, telephony applications, timers, game applications, thermometers, etc. The screen of a smartwatch may be configured to display information relating to any one of these functionalities. For example, the screen may display the current time, as well as any reminders that are relevant to the current day. Some smartwatches are able to connect wirelessly to other user devices, for example, via Bluetooth.

Generally, smartwatches differ from smart bands in that smartwatches typically have more functionality, or more advanced functionality, than smart bands. For example, a smart band may be concerned with solely tracking e.g. a user's fitness. An example of a smart band includes the so-called "FitBit". Conversely, a smartwatch may, for example, have capabilities that are closer to, if not the same as, a smartphone.

In either case, there is a need to control the manner in which information is displayed at the screen of a wearable electronic device, including for example a smartwatch or a smart band device.

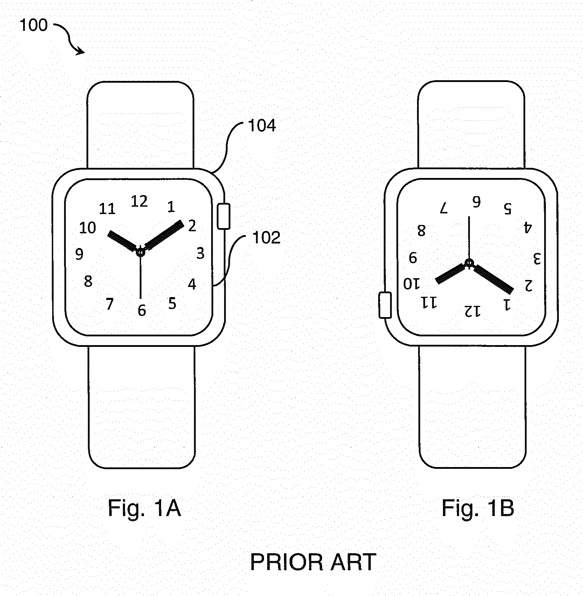

Figure 1A schematically shows a front view of an example of a known wearable electronic device 100. In Figure 1A, the wearable electronic device 100 is shown as being oriented in a first orientation. The wearable electronic device 100 may for example correspond to a smartwatch or smart band, as described previously.

In the example shown in Figure 1A, the screen 102 is displaying an image of a clock face, and the position of each of the clock arms in the image is updated so as to correspond to the current time. In Figure 1A, the number 12 (i.e. 12 o'clock) is shown as being located at the top of the screen 102 and the number 6 (i.e. 6 o'clock) is shown as being located at the bottom of the screen 102. This corresponds to the image being displayed with the correct orientation (sometimes referred to in the art as being displayed "upright").

Figure 1B schematically shows the wearable electronic device 100 shown in Figure 1A but oriented in a different, second orientation. In Figure 1B, the wearable electronic device 100 has been rotated by 180 degrees (in the plane of the screen 102) relative to the default orientation. This may have occurred, for example, as a result of the user wearing the electronic device 100 the "wrong" way round or in a non-conventional orientation or as a result of first and second strap portions having been fixed to the wrong ends of the housing 104. In any event, the device 100 is now displaying the information in a way that is inconvenient for the user.

Some electronic devices include an automatic screen rotation feature, using e.g. an accelerometer and gyroscope built into the device. This ensures, for example, that an image displayed at the screen is rotated in response to rotation of the device. However, if this is simply incorporated into a wearable device, an image will still be displayed with the wrong orientation if the user is wearing the wearable device in the wrong orientation. This is because the image will be rotated relative to an initial orientation that does not correspond to the image being displayed as "upright". As a result, the image will still appear as upside down to the user, even after the rotation has been applied. Thus, it will still be difficult and inconvenient for a user to make sense of the information that is being displayed at the screen.

In the examples described herein, there is provided a wearable electronic device that detects when the device is being worn in the "wrong" or non-conventional orientation, and automatically adjusts the orientation of a displayed image. The orientation of the displayed image is adjusted so that the image appears to be in the upright position to a user who is wearing the device. This means, for example, that the user does not have to manually adjust the orientation of the device in order for the image to be displayed in the upright position. Moreover, the wearable electronic device can achieve this using sensors that may already be provided as part of the wearable electronic device for other purposes.

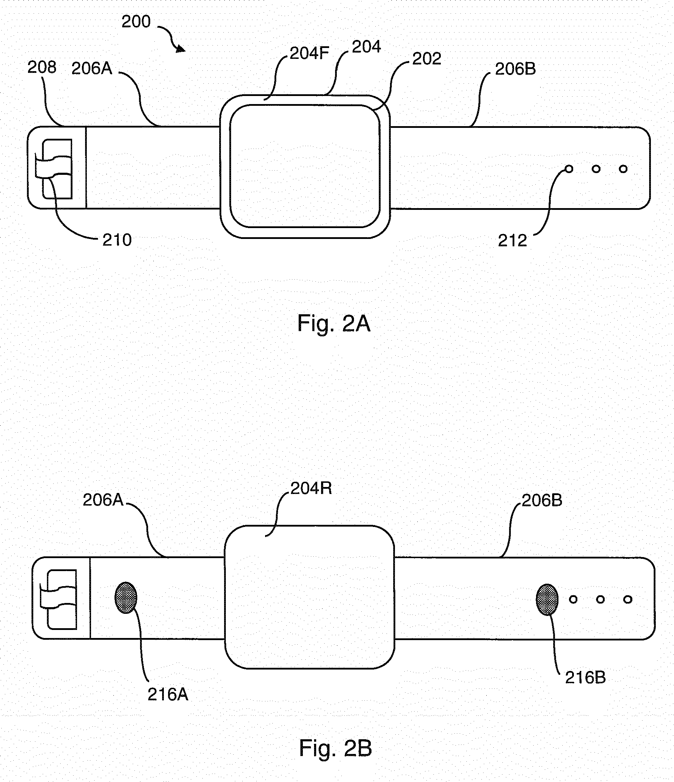

Figure 2A schematically shows a front view of an example of a wearable electronic device 200 in accordance with the present disclosure. The wearable electronic device 200 comprises a screen 202, a housing 204 and a strap 206. In the example shown in Figure 2A, the screen 202 and housing 204 have rectangular shape with rounded edges. It will be appreciated that, in some examples, the screen 202 and the housing 204 may have a different shape.

The screen 202 of the wearable electronic device 200 is operable to display an image to a user. The screen 202 may include, for example, an LCD or an LED screen. In some examples, the screen 202 may be a touch-screen. The screen 202 is located at a front surface of a housing 204 of the wearable electronic device 200.

The housing 204 contains, for example, one or more processors that are configured to control the display of an image at the screen 202, as well as other functions of the device 200. The housing 204 may also contain a memory for storing computer program instructions that are to be executed by the one or more processors. The housing 204 has a front surface 204F and a rear surface 204R. The front surface 204F is located furthest away from the skin on the user's wrist when the device 200 is being worn by the user. The rear surface 204R is located closest to the skin on the user's wrist when the device 200 is being worn by the user.

In the example shown, the strap 206 of the wearable electronic device 200 comprises a first, shorter strap portion 206A and a second, longer strap portion 206B. The first strap portion 206A and second strap portion 206B allow a user to control how tightly the wearable electronic device 200 is secured to the user's wrist. In the example shown, a buckle 208 with a buckle tongue 210 is provided on the shorter strap portion 206A for receiving the second strap portion 206B. The second strap portion 206B includes a plurality of adjustment holes 212 for receiving the buckle tongue 210 of the first strap portion 206A. In this way, the first strap portion 206A can be connected to the second strap portion 206B to give a desired fit for the user. It will be appreciated that this just one example of an arrangement for securing the electronic device to a user's wrist, and that other arrangements may be employed. In some arrangements, the first and second strap portions 206A, 206B may be of substantially equal lengths.

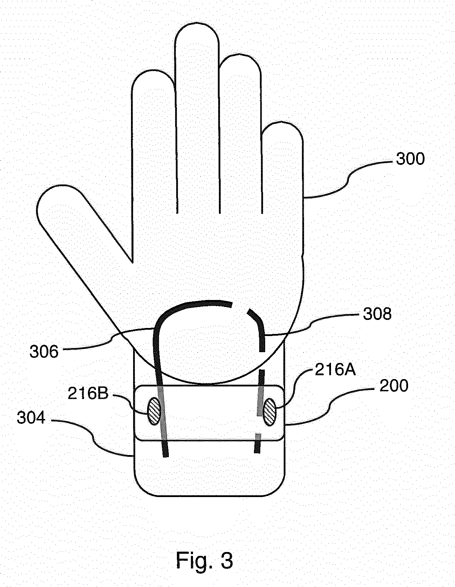

Figure 2B schematically shows a rear view of the wearable electronic device 200 shown in Figure 2A. As can be seen in Figure 2B, the first strap portion 206A comprises a first sensor 216A and the second strap portion 206B comprises a second sensor 216B. The sensors may be embedded within the strap 206 or may be located on the rear surface of the strap 206. Generally, the first and second sensors 216A, 216B will be located at positions on the strap 206 that allow an amplitude of the user's pulse to be measured at different locations on the anterior of the user's wrist. For example, one of the sensors will be located closer to the user's radial artery whilst the other sensor will be located closer to the user's ulnar artery (described later, in relation to Figure 3).

The first and second sensors 216A, 216B are each operable to detect the user's heartbeat when the user is wearing the device 200 around their wrist. The sensors 216A, 216B may include, for example, optical sensors, such as photoplethysmographic sensors, or vibrational sensors, such as a piezo-electric transducers. In some examples, the sensors 216A, 216B, may include voltage sensors for detecting a potential that is created at a particular point on the user's skin when the artery pulses with a heartbeat. The voltage sensors may include one or more electrodes that are in contact with the user's skin, and a biological transducer for detecting the voltage that is induced at the electrode(s). Any sensor for detecting a user's heart rate may be employed by the device 200 (provided that the sensor is small enough to fit in or on the strap).

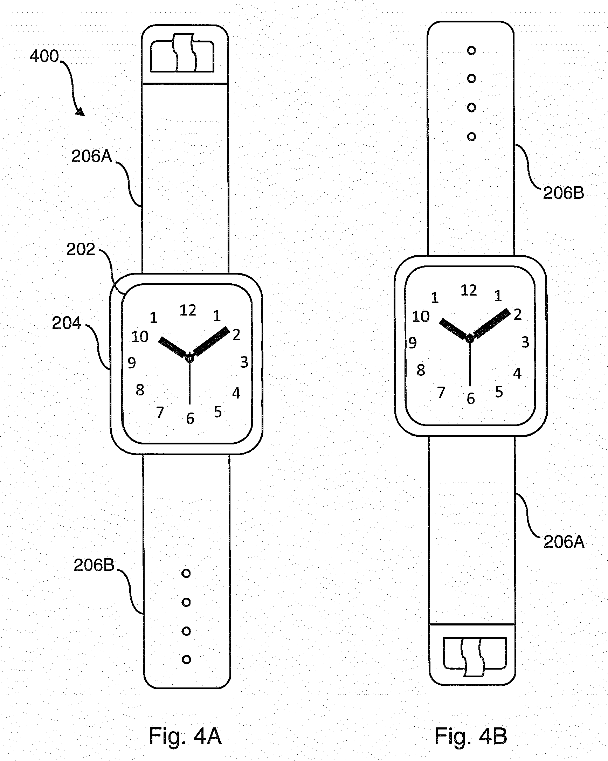

The sensors 216A, 216B are connected to one or more processors located within the housing 204 of the wearable electronic device 200. For example, a wired connection (not shown) may run through the interior of each strap portion, and may connect each sensor 216A, 216B to the one or more processors located within the housing 204. The operations performed by the one or more processors are described later, in relation to Figures 3 and 4.

Figure 3 schematically shows an anterior view of a user's left hand 300, with the wearable electronic device 200 being worn around the user's wrist 304. The strap of the electronic wearable device 200 is shown as including the first and second sensors 216A, 216B described previously. The first and second sensors 216A, 216B are shown as being located at opposite sides of the anterior of the user's wrist 304. Figure 3 also shows the position of the user's radial artery 306. The radial artery 306 and the ulnar artery 308 meet as shown in Figure 3. The radial artery 306 corresponds to the artery for which a person's pulse is typically most palpable (i.e. most easily felt from outside). This is because of the size of the radial artery 306 and its proximity to the surface of the user's arm / wrist 304.

In Figure 3, the second sensor 216B is shown as being located closer to the radial artery 306 than the first sensor 216A. This may be expected where, for example, the wearable electronic device 200 is being worn in a conventional manner. For example, it may be conventional that the first strap portion 206A is supported against the ulna-side (i.e. the outside edge when viewed looking at the back of the user's hand) of the user's wrist 304 and that the second strap portion 206B is supported against the radius-side (i.e. the inside edge when viewed looking at the back of the user's hand) of the user's wrist 304. As a result, the second sensor 216B will typically be located closest to the user's radial artery 306 when the device 200 is being worn in the conventional manner. This means that the second sensor 216B will detect the user's pulse (or heartbeat) as having a larger amplitude compared with the amplitude of the user's pulse that is detected at the first sensor 216A. If the user's pulse is detected as having a larger amplitude at the first sensor 216A, then this indicates that the electronic device 200 is being worn in the "wrong" orientation (i.e. that the wearable electronic device 200 is not being worn in the default orientation).

The first and second sensors 216A, 216B are configured to output respective signals to a processor. The signals output by the first and second sensors 216A, 216B indicate an amplitude of the user's heartbeat, as measured at the respective sensors. For example, the amplitudes of the output signals may correspond to the amplitude of the user's detected pulse. These signals are received as respective input signals at the processor. As mentioned earlier, these signals may be relayed to the processor via a wired connection between each sensor 216A, 216B and the processor.

The processor is configured to determine an orientation for displaying an image at the screen of the wearable electronic device 200 based on the input signals received at the processor. For example, the processor may be configured to compare the amplitudes of the received signals and to determine whether the user's pulse is being detected with a larger amplitude at the first sensor 216A or at the second sensor 216B.

If the user's pulse is detected with a larger amplitude at the second sensor 216B, the processor may make no adjustments to the orientation with which an image is being displayed at the device 200 as the image can be displayed with the default orientation. However, if the user's pulse is detected with a larger amplitude at the first sensor 216A, then the processor may cause the displayed image to be rotated by 180 degrees. That is, the orientation of the displayed image may be rotated by 180 degrees (in the plane of the screen) relative to the normal or default orientation of the image. In some examples, the processor may cause the image to be rotated by 180 degrees before it is displayed as necessary. For example, on switching the device 100 on or switching the screen 202 of the device 100 on, the processor may detect that the device 200 is not being worn in the default orientation and may ensure that any images that are to be displayed are displayed but rotated by 180 degrees relative to the normal or default orientation. Alternatively or additionally, on switching the device 100 on or switching the screen 202 of the device 100 on, the processor may determine the orientation of the screen 202 on the basis of the input signals received from the sensors 216A, 216B and cause the images to be displayed in the appropriate orientation in the first instance.

Figures 4A and 4B schematically show the wearable electronic device 200 being worn in two different orientations. While the device 200 shown in Figures 4A and 4B is shown in an unfastened state, it will be appreciated that the first and second strap portions 206A, 206B will be fastened together when the user is wearing the device 200.

In Figure 4A, the wearable electronic device 200 is shown as being oriented in the default orientation, i.e. the orientation that the wearable electronic device 200 would have when it is being worn in a conventional manner. The screen 202 of the wearable electronic device 200 is shown in Figure 4A as displaying an image of a clock face. The orientation with which the image is being displayed corresponds to the default orientation of the image. In other words, the orientation that would result in the image being displayed as upright when the user is wearing the electronic device 200 in the conventional manner.

Figure 4B schematically shows the wearable electronic device 200 of Figure 4A, but rotated relative to the first orientation by 180 degrees. The orientation shown in Figure 4B corresponds to an orientation that the wearable electronic device 200 would have when it is being worn the "wrong" or unconventional way round. For example, it is generally unconventional that the first strap portion 206A (with e.g. a buckle) rests against the radius-side (i.e. inside edge) of the user's wrist 304, when the device 200 is being worn.

It can be seen in Figure 4B that, despite the orientation of the device 200, the displayed image will not appear upside down to a user that is wearing the device 200. This is because the processor has determined, based on the input signals received from the first and second sensors 216A, 216B, that the wearable electronic device 200 is oriented 180 degrees relative to the default orientation. In response to this determination, the displayed image has been rotated by 180 degrees accordingly. Thus, a user wearing the electronic device 200 with this orientation does not need to e.g. remove, rotate, and re-apply the wearable electronic device 200 to their wrist, in order to make sense of the image.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A wearable electronic device comprising:
a screen for displaying an image to a user;
a strap for securing the wearable electronic device to a wrist of the user;
at least two sensors located at different locations on or in the strap, each sensor being operable to detect the user's heartbeat when the wearable electronic device is being worn by the user; and
a processor configured and arranged to:
receive input signals from the at least two sensors;
determine, based on input signals received from the sensors, an orientation for displaying an image at the screen of the wearable electronic device; and
cause the image to be displayed with the determined orientation at the screen of the wearable electronic device.

2. A wearable electronic device according to claim 1, wherein the processor is configured to compare the amplitudes of the input signals received from the sensors to determine the orientation for displaying the image based on the comparison.

3. A wearable electronic device according to claim 1 or claim 2, wherein:
the strap comprises a first strap portion and a second strap portion, the first strap portion being shorter than the second strap portion, the first strap portion and the second strap portion being fastenable together to secure the wearable electronic device to a wrist of a user; and
the first sensor is located at the first strap portion and the second sensor is located at the second strap portion such that the sensors are arranged to detect the user's heartbeat at opposite sides of the anterior of the user's wrist when the wearable electronic device is being worn by the user.

4. A wearable electronic device according to claim 3, wherein the processor is configured to detect, based on the received input signals, whether the wearable electronic device is being worn in a default orientation, the default orientation corresponding to the first strap portion being wrapped around the outside edge of the user's wrist and the second strap portion being wrapped around the inside edge of the user's wrist.

5. A wearable electronic device according to claim 4, wherein the processor is configured to rotate the image by 180 degrees if the wearable electronic device is detected as not being worn in the default orientation.

6. A wearable electronic device according to any of claims 1 to 5, wherein the wearable electronic device comprises a smartwatch.

7. A method for controlling the display orientation of an image at a wearable display device, the method comprising:
detecting a user's pulse with a first sensor and a second sensor of the wearable display device;
determining, based on the amplitudes of signals output by the sensors, an orientation for displaying an image at the wearable display device; and
causing the image to be displayed with the determined orientation at the wearable display device.

8. A method according to claim 7, wherein determining an orientation for displaying an image at the wearable display device comprises determining whether the amplitude of the signal output by the first sensor is larger than the amplitude of the signal output by the second sensor.

9. A method according to claim 8, wherein one of the sensors is expected to output a signal with a larger amplitude when the display device is being worn in a default orientation, and wherein the method comprises rotating the image by 180 degrees if the amplitude of the user's pulse is detected as being larger at the other sensor.

10. A method according to any of claims 7 to 9, comprising detecting an amplitude of the user's pulse at different sides of the anterior of the user's wrist.

11. A method according to any of claims 9 to 10, wherein the wearable display device comprises a smartwatch.
